# EUROPÄISCHE PATENTANMELDUNG

(11) **EP 0 887 564 A1**
(43) Veröffentlichungstag der Anmeldung: **30.12.1998**
(21) Anmeldenummer: 98110758.4
(22) Anmeldetag: 12.06.1998
(51) Int. Cl.: F16B 37/06, F16B 33/00, B23P 19/06

(54) **Formteil für Kfz-Innenausstattung, insbesondere Abdeckung oder Blende**

(30) Priorität: 28.06.1997 DE 19727629
(71) Anmelder: Weigend, Horst, 92721 Störnstein (DE)
(72) Erfinder: Weigend, Horst, 92721 Störnstein (DE)
(74) Vertreter: Graf, Helmut, Dipl.-Ing.

(57) **Zusammenfassung**

Die Erfindung bezieht sich auf eine neuartige Ausbildung eines Formteils für Kfz-Innenausstattung, insbesondere Abdeckung oder Blende, mit wenigstens einem an einer Platte oder Platine des Formteils vorgesehenen Befestigungsbolzen.

## Beschreibung

Die Erfindung bezieht sich auf ein Formteil für die Kfz-Innenausstattung.

Aufgabe der Erfindung ist es, ein Formteil aufzuzeigen, welches bei einfacher und zuverlässiger Befestigung ein optisch ansprechendes äußeres Erscheinungsbild gewährleistet, insbesondere auch so ausgeführt ist, daß im Bereich der Befestigungsbolzen, d.h. dort, wo diese im Formteil verankert sind, keine Störung eines einheitlichen, optischen Erscheinungsbildes eintritt.

Zur Lösung dieser Aufgabe ist eine Verblendung für Kfz entsprechend dem Patentanspruch 1 ausgebildet.

Weiterbildungen der Erfindung sind Gegenstand der Unteransprüche.

Die Erfindung wird im Folgenden anhand der Figuren an einem Ausführungsbeispiel näher erläutert. Es zeigen:
- Fig. 1: in vergrößerter Darstellung und im Schnitt eine Blende aus Aluminiuim oder einer Aluminiumlegierung im Bereich eines an dieser Blende befestigten Bolzen;
- Fig. 2: eine Draufsicht auf die Außenfläche der Blende;
- Figuren 3 und 4: in Darstellungen wie Figuren 1 und 2 eine weitere mögliche Ausführungsform;
- Fig. 5: im Schnitt eine profilierte bzw. gewölbte Blende mit dem Befestigungsbolzen

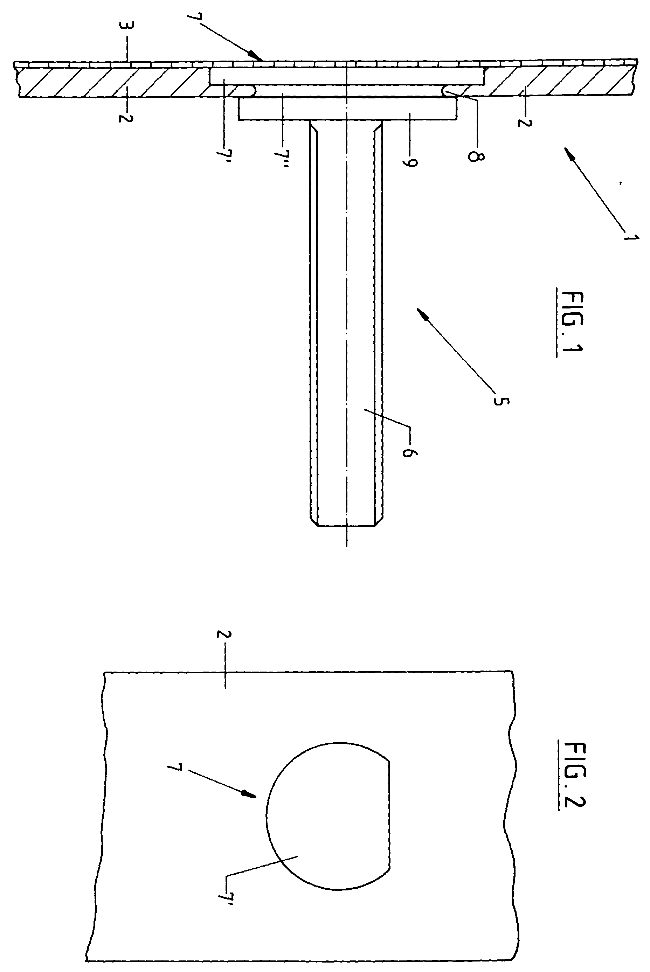

In den Figuren 1 und 2 ist 1 eine Blende aus einem duktilen Metall, beispielsweise aus Aluminium bzw. aus einer Aluminiumlegierung, und zwar zur Verwendung bei der Kfz-Innenausstattung. Die Blende 1 ist beispielsweise von einer ebenen Platte 2 aus dem duktilen Metall gebildet, die an einer Oberflächenseite mit einer eine spezielle Oberflächenstruktur und/oder Farbgebung bildenden Schicht 3, beispielsweise mit einer Kunststoffschicht oder einer Schicht aus einem Holzfurnier oder einem Holzfurnier-Imititat versehen ist.

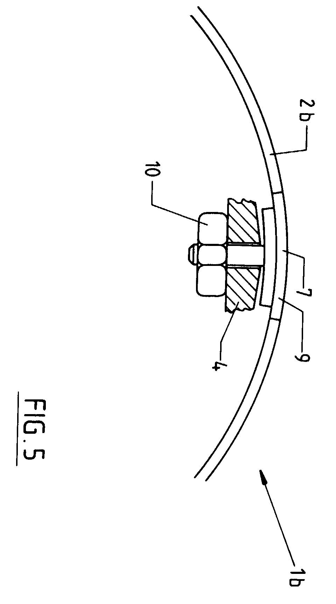

Zur Befestigung der Blende 1 an einem karosserieseitigen Träger 4 (Fig. 5) sind mehrere Befestigungsbolzen, d.h. bei der dargestellten Ausführungsform Gewindebolzen 5 vorgesehen. Jeder Gewindebolzen 5 besteht aus einem Gewindeschaft 6 und einem Kopf 7, der sehr flach ausgebildet ist und in Richtung der Achse des Gewindeschaftes 6 eine Höhe aufweist, die wesentlich kleiner ist als die Dicke D der Platte 2 bzw. Blende 1.

Der Kopf 7 bildet an der dem Gewindeschaft 6 abgewandten Seite einen Kopfabschnitt 7', dessen Dicke in Richtung der Achse des Gewindeschaftes 6 sehr viel kleiner ist als die Dicke D der Platte 2 bzw. Blende 1. Weiterhin besitzt der Kopf 7 einen Kopfabschnitt 7'' mit einem gegenüber dem Abschnitt 7' reduzierten Außendurchmesser. Dieser Kopfabschnitt 7'' ist mit einer ringförmigen, radial nach außen hin offenen Nut 8 versehen. Die beiden Abschnitte 7' und 7'' haben zusammen eine Dicke, die gleich oder geringfügig kleiner ist als die Dicke D der Platte 2. Der Kopfabschnitt 7' steht an seinem Umfang über den Umfang des Kopfabschnittes 7'' vor und besitzt einen von der Kreisform abweichenden Querschnitt, beispielsweise den aus der Fig. 2 deutlich erkennbaren teilkreisförmigen Querschnitt.

An den Kopfabschnitt 7'' schließt sich zum Gewindeschaft 6 hin eine Distanzscheibe 9 an, die einen Durchmesser aufweist, der größer ist als der Außendurchmesser des mit der Nut 8 versehenen Kopfabschnittes 7'.

Der Befestigungsbolzen 5 ist in der Platte 2 durch Einsetzen in eine dort eingebrachte Öffnung und durch anschließendes Verpressen des Materials der Platte 2 derart befestigt, daß das Material der Platte 2 nach dem Verpressen durch plastisches Verformen den Kopfabschnitt 7'' dicht umschließt und die Nut 8 vollständig ausfüllt und damit sowohl der Kopfabschnitt 7'', als auch der Kopfabschnitt 7' vollständig in der Platte 2 eingebettet ist und die den Gewindeabschnitt 6 abgewandte Seite des Kopfabschnittes 7' bündig mit der der Schicht 3 zugewandten Seite der Platte 2 liegt, während sich die Distanzscheibe 9 mit ihrer dem Kopf 7 zugewandten Seite im Bereich der Nut 8 an dem Material der Platte 2 an der Innenfläche der Blende 1 abstützt.

Durch die bündige Lage des Kopfes 7 mit der Außenfläche der Platte 2 ist es möglich, die Schicht 3 nach dem Befestigen der Bolzen 5 aufzubringen, ohne daß sich in der der Platte 2 abgewandten Seite der dünnen Schicht 3 der Übergang zwischen der Platte 2 und dem Kopf 7 des jeweiligen Bolzens 5 abzeichnet. Durch die von der Kreisform abweichende Formgebung des Kopfes 7 ist dieser verdrehungssicher in der Platte 2 gehalten. Bei am Träger 4 befestigter Blende 1 liegt die jeweilige Distanzscheibe 9 am Träger 4 an, während die Platte 2 von diesem Träger beabstandet ist. Befestigungskräfte zwischen Bolzen 5 und Träger 4 wirken also nur auf den Gewindeschaft 6 sowie auf die Distanzscheibe 9 und nicht auf die Verbindung zwischen Bolzen 5 und Platte 2, so daß solch Befestigungskräfte beispielsweise durch Anziehen einer Mutter 10 oder eines anderen Befetigungselementes nicht zu optisch störenden Verformungen der Blende 1 im Bereich der Befestigungsbolzen 5 führen können.

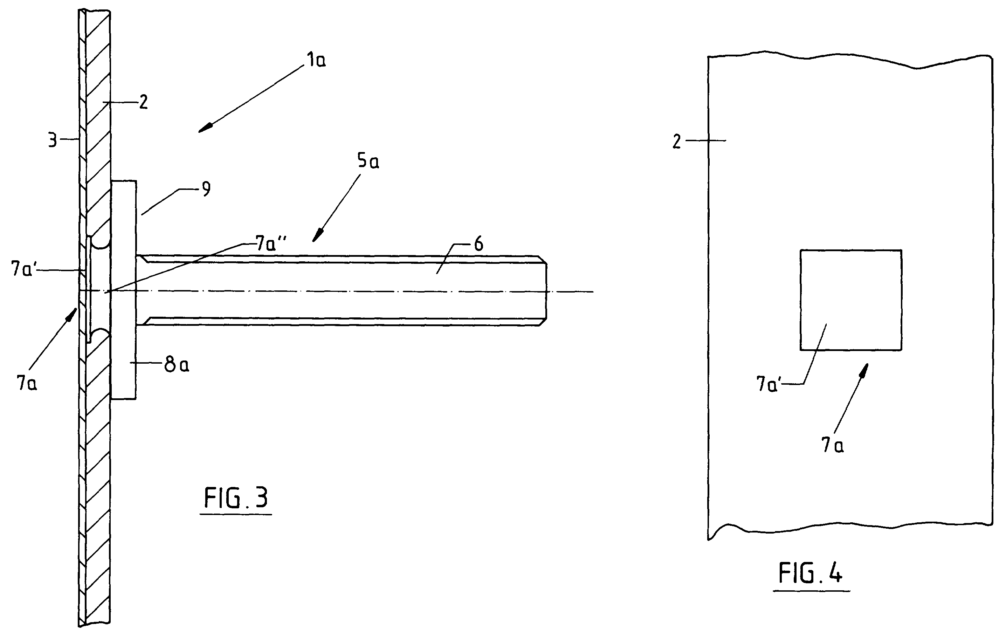

Die Figuren 3 und 4 zeigen als weitere mögliche Ausführungsform eine Blende 1a, die sich von der Blende 1 dadurch unterscheidet, daß anstelle der Befestigungsbolzen 5 Befestigungsbolzen 5a verwendet sind, die wiederum den Gewindeschaft 6 und die einstückig mit dem Gewindeschaft hergestellte Distanzscheibe 9 aufweisen. Anstelle des Kopfes 7 ist ein im Querschnitt gegenüber der Distanzscheibe 9 sehr verkleinerter Kopf 7a vorgesehen, und zwar mit dem der Distanzscheibe 9 abgewandten Kopfabschnitt 7a' und mit dem die Nut 8a aufweisenden Kopfabschnitt 7a''.

Die Höhe des Kopfabschnittes 7' beträgt bei der Blende 1a lediglich einen Bruchteil der axialen Höhe des Abschnittes 7a'', d.h. bei der dargestellten Ausführungsform ist die axiale Höhe des Kopfabschnittes 7a etwa ein Zehntel der Gesamthöhe des Kopfes 7a. Der Kopf 7a bzw. dessen Abschnitte 7a' und 7a'' besitzen eine von der Kreisform abweichende Formgebung, d.h. bei der dargestellten Ausführungsform eine quadratische Formgebung.

Die Höhe des Kopfes 7a ist wiederum gleich der Dicke der Platte oder Platine 2 der Blende. Nach dem Einsetzen in eine in der Platte 2 vorgesehene Öffnung ist das Material der Platte 2 so verpreßt, daß dieses durch plastische Verformung die Nut 8a vollständig ausfüllt, die dem Gewindeschaft 6 abgewandte Seite des Kopfes 7a bündig mit der Außenfläche der Platte 2 liegt und sich die Distanzscheibe 9 gegen die Innenfläche der Platte 2 abstützt.

Die Befestigungsbolzen 5 und 5a bestehen beispielsweise aus Stahl, vorzugsweise ebenfalls aus einem duktileren Metall, beispielsweise aus Aluminium oder einer Aluminiumlegierung.

Die Fig. 5 zeigt als weitere mögliche Ausführungsform eine Blende 1b. Diese Blende unterscheidet sich von der Blende 1 im wesentlichen dadurch, daß beim Verpressen der Befestigungsbolzen 5 zugleich auch eine Profilierung der Platte 2, d.h. eine Wölbung dieser Platte erfolgt ist, wobei mit der Platte 2 auch der Kopf 7 und die Distanzscheibe 9 in gleicher Weise profiliert wurden, so daß der Kopf 7 und die Distanzscheibe 9 ebenfalls eine entsprechende Wölbung aufweisen.

Vorstehend wurde davon ausgegangen, daß die Befestigung am Träger 4 mittels Muttern 10 erfolgt. Selbstverständlich können auch andere Befestigungselemente vorgesehen sein, beispielsweise selbstsperrende, auf den Schaft 6 aufgeschobene Haltestücke oder Haltescheiben, wobei in diesem Fall der jeweilige Schaft an seiner Außenfläche auch ohne das Gewinde oder mit einer anderen Profilierung ausgeführt sein kann.

### Bezugszeichenliste

- 1, 1a, 1b: Blende
- 2: Platte oder Platine
- 3: Oberflächenschicht
- 4: Träger
- 5, 5a: Befestigungsbolzen
- 6: Gewindeschaft
- 7, 7a: Kopf
- 7', 7'': Kopfabschnitt
- 7a', 7a'': Kopfabschnitt
- 8, 8a: Umfangsnut
- 9: Distanzscheibe
- 10: Mutter

## Patentansprüche

1. Formteil für Kfz-Innenausstattung, insbesonder Abdeckung oder Blende, mit wenigstens einem an einer Platte oder Platine des Formteils vorgesehenen Befestigungsbolzen (5), **dadurch gekennzeichnet**, daß der Befestigungsbolzen (5) einen Bolzenschaft (6) mit Kopf und mit einer am Kopf gebildeten Umfangsnut (8, 8a) aufweist, daß zwischen dem Kopf (7, 7a) und dem Schaft (6) eine Distanzscheibe (9) vorgesehen ist, daß das Material der Platte oder Platine (2) durch Pressen derart bleibend verformt ist, daß es den Kopf (7, 7a) im Bereich der Nut (8, 8a) formschlüssig hintergreift und gegen die dem Kopf (7, 7a) zugewandte Seite der Distanzscheibe (9) anliegt, daß die dem Schaft (6) abgewandte Seite des Kopfes (7, 7a) bündig mit der dem Schaft (6) abgewandten Seite der Platte oder Platine (2) liegt, und daß der Kopf (7, 7a) mit einer von der Kreisform abweichenden Umfangsfläche dicht von dem Material der Platte oder Platine (2) umschlossen ist.

2. Formteil nach Anspruch 1, dadurch gekennzeichnet, daß der wenigstens eine Befestigungsbolzen (5) ein Gewindebolzen ist.

3. Formteil nach Anspruch 1 oder 2, dadurch gekennzeichnet, daß der Kopf (7) an einem dem Schaft (6) entfernt liegenden Ende einen Kopfabschnitt (7') mit einem im Vergleich zur Distanzscheibe (9) größeren Querschnitt bildet.

4. Formteil nach einem der vorhergehenden Ansprüche, dadurch gekennzeichnet, daß der Kopf (7a) einen im Vergleich zur Distanzscheibe (9) reduzierten Querschnitt aufweist.

5. Formteil nach einem der vorhergehenden Ansprüche, dadurch gekennzeichnet, daß der Kopf (7, 7a) sowie die Distanzscheibe (9) gleichsinnig mit der Platine (2) profiliert bzw. verformt sind.

6. Formteil nach einem der vorhergehenden Ansprüche, dadurch gekennzeichnet, daß die Platte oder Platine aus Aluminium oder einer Aluminiumlegierung besteht

7. Formte nach einem der vorhergehenden Ansprüche, dadurch gekennzeichnet, daß der Bolzen (5, 5a) aus Aluminium oder Stahl besteht.
